# EUROPEAN PATENT SPECIFICATION

(11) **EP 3 713 785 B1**
(45) Date of publication and mention of the grant of the patent: **07.08.2024**
(21) Application number: 18873022.0
(22) Date of filing: 09.10.2018
(51) Int. Cl.: F24F 1/02, F24F 5/00, F24F 11/52, F24F 13/20, F24F 11/61, F24F 110/00

(54) **PORTABLE AIR-CONDITIONING DEVICE**
TRAGBARE KLIMATISIERUNGSVORRICHTUNG
CLIMATISEUR PORTABLE

(30) Priority: 06.11.2017 TR 201717323
(43) Date of publication of application: 30.09.2020
(73) Proprietor: Arçelik Anonim Sirketi, 34445 Istanbul (TR)
(72) Inventor: KUYUMCU, Arda, 34445 Beyoglu/Istanbul (TR); MUTLUDOGAN, Mehmet, 34445 Beyoglu/Istanbul (TR); TOSUN, Isa, 34445 Beyoglu/Istanbul (TR); GERZELI, Ismail, 34445 Beyoglu/Istanbul (TR); AKSOY, Adem, 34445 Beyoglu/Istanbul (TR)
(86) International application number: PCT/TR2018/050576
(87) International publication number: WO 2019/088957

(56) References cited:
- EP-A1- 2 131 112
- WO-A1-2016/196109
- KR-A- 20110 073 764
- KR-A- 20110 073 764
- US-A1- 2015 135 743
- US-A1- 2015 314 671
- US-A1- 2015 316 311

## Description

The present invention relates to a portable air-conditioning device.

In general, air-conditioning devices comprise an internal unit and an external unit, and the heat drawn from the internal unit during cooling process is discharged to the outer environment by the external unit. In portable (transportable) air-conditioning devices, cooling process is usually performed by discharging the heat drawn from the ambiance to the outer environment by means of a vent extending outdoors through an aperture opened on a window or a wall. However, the vent structure that enables heat to be discharged to the outer environment, restricts transportability of the air-conditioning device. In addition, portable air-conditioning devices are not preferred by many users since an aperture to be opened on a window or a wall for the vent needs to be formed suitably, in order to obtain an efficient cooling performance by providing insulation between the ambiance that requires cooling and the outer environment. This problem can be eliminated with applications in which a part of such residual heat is stored in a thermal storage member without discharging. In portable air-conditioning devices, storage of residual heat which has to be discharged to the outer environment by a condenser using PCM packages made of phase change material (PCM) with high heat storage capacity, is known. Phase change process is completed after storing a specific amount of residual heat and the PCM packages become incapable of heat storage. In this case, PCM packages require being subjected to a regeneration process by means of cooling. The PCM packages should be removed and placed in a cooler-freezer device for the regeneration process. The duration in which the PCM packages store a certain amount of heat, varies according to ambient conditions. Since the environmental parameters such as temperature and humidity would present varying durations, it is difficult for a user to know when the PCM packages should be cooled. Due to the difficulty, many users do not replace the PCM packages in due time, consequently decreasing the cooling performance of the portable air-conditioning device.

The patent application no. DE3938875 (A1), discloses a portable air-conditioning device in which discharging of heat is eliminated by means of storing thermal energy on the phase change material.

The patent application no. WO2017137327 (A1) relates to a transportable air-conditioning device.

The patent application no. US2015135743 (A1) relates to air conditioning systems, and in particular relates to an air conditioning system utilizing supercooled phase chase material to store thermal energy.

The patent application no. KR20110073764 (A) relates to a portable heat storage type air conditioner, and more particularly, to a portable heat storage type air conditioner capable of effectively accumulating heat discharged from a condenser.

The patent application no. US2015314671 (A1) to a transport refrigeration system (TRS) including a thermal accumulator having a phase change material (PCM) and a transport refrigeration unit (TRU).

The aim of the present invention is to realize a portable air-conditioning device in which the PCM packages are enabled to be replaced in due time by performing precise temperature measurements.

The portable air-conditioning device provided to achieve the aim of the present invention is disclosed in the claims.

In the portable air-conditioning device PCM packages (phase change material packages) are used, storing residual heat discharged by the condenser. The PCM packages become unable to store heat after being used for a certain duration, so they should be removed for the regeneration (cooling) process from the heat storage chamber in which they are disposed.

The portable air-conditioning device of the invention comprises a temperature sensing thermistor placed in a heat storage chamber or on a PCM package. The control unit evaluates the temperature information received from the thermistor, determines completion of the usage time of a PCM package when the temperature of the heat storage chamber or a PCM package exceeds a given value, and enables the user to be alerted by a lighting display and/or an alarm for cooling the PCM package or for replacing it with an already cooled one.

The portable air-conditioning device provided to achieve the aim of the present invention is illustrated in the accompanying drawings, wherein:

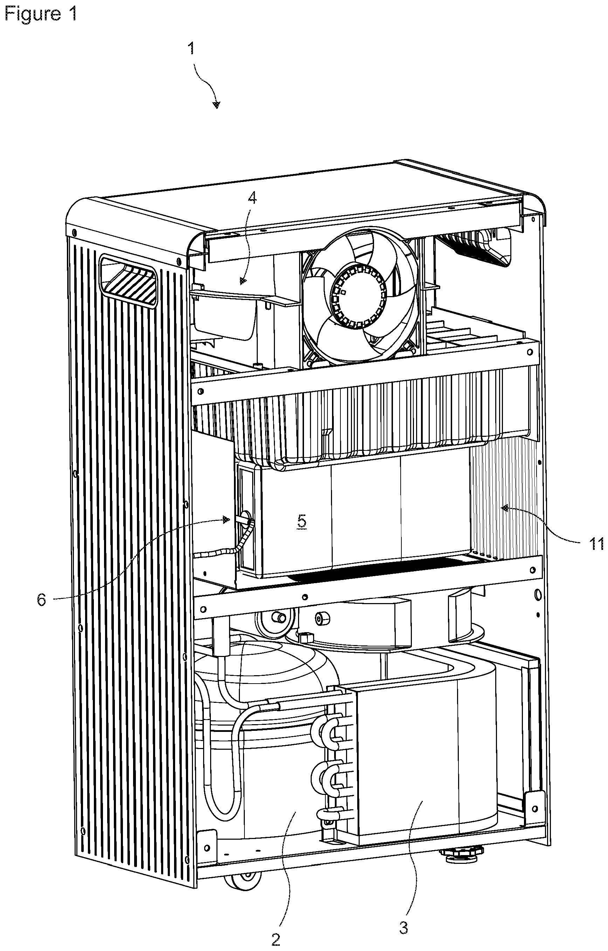

Figure 1 is a perspective view of in the portable air-conditioning device.
Figure 2 is a perspective view of a PCM package and a thermistor placed thereon.
Figure 3 is a perspective view of a PCM package provided with a metal sheet on one of its surfaces, and the thermistor placed thereon.
Figure 4 is a perspective view of a PCM package provided with a metal probe on one of its surfaces, and the thermistor placed thereon.
Figure 5 is a perspective view of a metal probe.
Figure 6 is a schematic view of a holder and a spring enabling the thermistor to be attached on a PCM package.

The elements in the figures are numbered individually and the correspondence of these numbers are given hereinafter.
1. Portable air-conditioning device
2. Compressor
3. Condenser
4. Evaporator
5. PCM package
6. Thermistor
7. Metal sheet
8. Metal probe
9. Holder
10. Spring
11. Heat storage chamber

The portable air-conditioning device (1), comprises a compressor (2) enabling the cooling cycle, a condenser (3) enabling heat to be discharged to the outer environment by condensing a refrigerant, an evaporator (4) drawing heat from the ambiance by evaporating the coolant and enabling cooling of the ambient air, at least one phase change material (PCM) package (5) (PCM package (5) for short) obtained by packing phase change material (PCM) with high heat storage capacity in a plastic container (not shown in the figures), transferring and storing the heat of the condenser (3), and a heat storage chamber (11) in which the PCM packages (5) are placed.

The portable air-conditioning device (1) of the invention comprises,
- a thermistor (6) placed inside the heat storage chamber (11), for example on the internal surface of a side wall of the heat storage chamber (11) or on a PCM package (5), whose electrical resistance value changes according to the temperature value it senses, and
- a control unit (not shown in the figures) determining by evaluating the temperature information from the thermistor (6), the completion of the usage time of a PCM package (5), upon the temperature of the heat storage chamber (11) or the PCM package (5) exceeding a limit value presaved to its memory, and enabling the user to be alerted by means of visual and/or audible alert, for example by a lighting display and/or an alarm for cooling the PCM package (5) or for replacing it with an already cooled PCM package (5).

In an embodiment of the invention, the thermistor (6) is of the NTC (Negative Temperature Coefficient) type, and its resistance decreases as the temperature of the PCM package (5) increases.

In an embodiment of the invention, the thermistor (6) is of the PTC (Positive Temperature Coefficient) type, and its resistance increases as the temperature of the PCM package (5) increases.

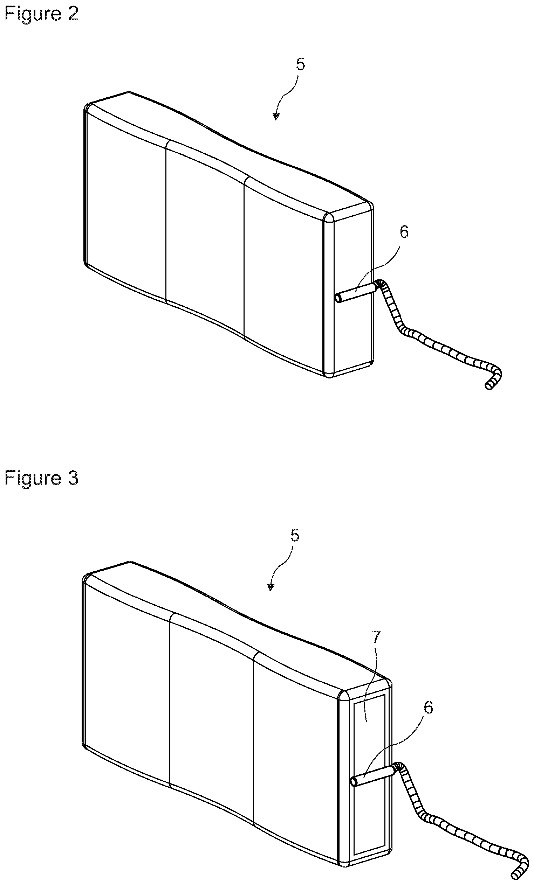

According to the invention, the portable air-conditioning device (1) comprises a PCM package (5) shaped as a rectangular prism, and at least one metal plate (7) constituting at least one surface of the PCM package (5), on which the thermistor (6) is placed. The inner surface of the metal plate (7) contacts the phase change material, and its outer surface contacts the thermistor (6). Since thermal conductivity of the metal plate (7) is higher than the plastic container of a PCM package (5), the thermistor (6) is enabled to sense the temperature of the PCM package (5) correctly and rapidly (Figure 3).

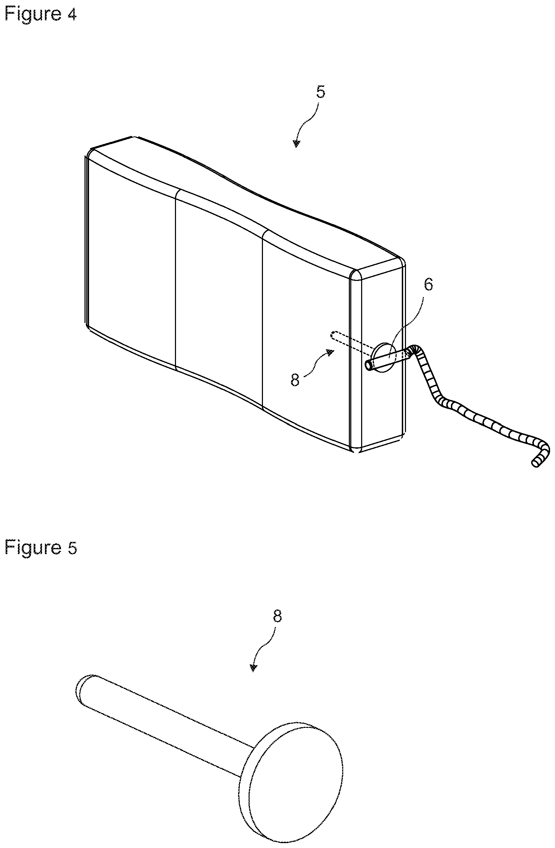

In another embodiment of the invention, the portable air-conditioning device (1) comprises a metal probe (8) placed to the PCM package (5) by being inserted in vertical direction to one of its surfaces, whose end extending into the PCM package (5) contacts the phase change material, and on whose cap resting on a surface of the PCM package (5), is placed the thermistor (6). Thus, temperature information can be received from the phase change material disposed in the interior of the PCM package (5), increasing measurement precision (Figure 4, Figure 5).

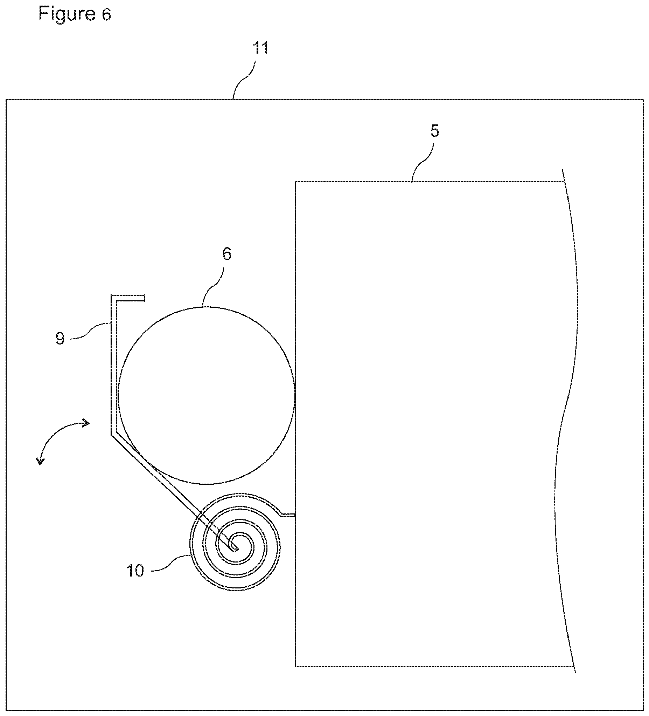

In another embodiment of the invention, the portable air-conditioning device (1) comprises a holder (9) and a spring (10) provided in the heat storage chamber (11) or on a PCM package (5), enabling the thermistor (6) to be placed so as to continuously contact the outer surface of the PCM package (5), or the metal plate (7), or the cap of the metal probe (8), or the inner surface of the heat storage chamber (11) (Figure 6).

In another embodiment of the invention, the control unit evaluates the temperature information from the thermistor (6) and calculates the remaining usage time of a PCM package (5) until its replacement is required, and enables informing the user by means of an indicator.

In another embodiment of the invention, the control unit evaluates the temperature information from the thermistor (6) and calculates the useful lifetime of a PCM package (5) and enables informing the user by means of an indicator.

The temperature of the PCM package (5) is measured by the thermistor (6), the temperature information received from the thermistor (6) is evaluated by the control unit, and an alert is signaled to the user by a lighting display and/or an alarm regarding cooling of the PCM package (5) or its replacement with an already cooled one. Thus, the portable air-conditioning device (1) is prevented from being operated with a PCM package (5) whose usage time is completed, and cooling performance is enhanced by enabling the PCM package (5) to be replaced in correct times.

## Claims

1. Air-conditioning device (1), **comprising** a compressor (2) enabling the cooling cycle, a condenser (3), an evaporator (4), at least one PCM package (5) transferring and storing the heat of the condenser (3), and a heat storage chamber (11) in which the PCM package (5) are placed, a thermistor (6) placed into the heat storage chamber (11) or on the PCM package (5), and a control unit determining by evaluating the temperature information from the thermistor (6), completion of the usage time of the PCM package (5) upon the temperature of the heat storage chamber (11) or the PCM package (5) exceeding a limit value pre-saved to its memory the air-conditioning device being **characterized in that ,** it is portable, **in that** the control unit enables the user to be alerted by means of visual and/or audible alert for cooling the PCM package or for its replacement, **in that** the PCM package (5) is shaped as a rectangular prism, **and in that it comprises** at least one metal plate (7) constituting at least one surface of the PCM package (5), on which the thermistor (6) is placed.

2. A portable air-conditioning device (1) according to claim 1 **characterized by** a holder (9) and a spring (10) provided in the heat storage chamber (11) or on a PCM package (5), enabling the thermistor (6) to be placed so as to continuously contact the outer surface of the PCM package (5), or the inner surface of the heat storage chamber (11)

3. A portable air-conditioning device (1) according to claim 1 or 2 **characterized by** the control unit calculating the remaining usage time of a PCM package (5) by evaluating the temperature information from the thermistor (6).

4. A portable air-conditioning device (1) according to any one of the preceding claims, **characterized by** the control unit calculating the useful lifetime of a PCM package (5) by evaluating the temperature information from the thermistor (6).

## Patentansprüche

1. Eine Klimaanlage (1) **umfasst** einen Kompressor (2), der den Kühlkreislauf ermöglicht, einen Kondensator (3), einen Verdampfer (4), mindestens ein PCM-Paket (5), das die Wärme des Kondensators (3) überträgt und speichert, und eine Wärmespeicherkammer (11), in dem das PCM-Paket (5) platziert ist, ein in der Wärmespeicherkammer (11) oder auf dem PCM-Paket (5) platzierter Thermistor (6) und eine Steuereinheit, die durch Auswertung der Temperaturinformationen des Thermistors (6) ermittelt, wobei die Nutzungsdauer des PCM-Pakets (5) beendet wird, wenn die Temperatur der Wärmespeicherkammer (11) oder des PCM-Pakets (5) einen in seinem Speicher vorab gespeicherten Grenzwert überschreitet, das Klimatisierungsgerät ist **dadurch gekennzeichnet,** wobei es tragbar ist, indem die Steuereinheit es ermöglicht, den Benutzer mittels optischer und/oder akustischer Warnung auf die Kühlung des PCM-Pakets oder seinen Austausch aufmerksam zu machen, **und dadurch,** dass das PCM-Paket (5) die Form eines rechteckigen Prismas hat, und , dass es mindestens eine Metallplatte (7) umfasst, die mindestens eine Oberfläche des PCM-Gehäuses (5) bildet, auf der der Thermistor (6) platziert ist.

2. Ein tragbares Klimagerät (1), wie in Anspruch 1 aufgeführt, **ist dadurch gekennzeichnet, dass** ein Halter (9) und eine Feder (10) in der Wärmespeicherkammer (11) oder an einem PCM-Gehäuse (5) vorgesehen sind, wodurch der Thermistor (6) so platziert werden kann, dass er die Außenfläche des PCM Verpackung (5) oder der Innenfläche der Wärmespeicherkammer (11) kontinuierlich berührt.

3. Ein tragbares Klimagerät (1), wie in Anspruch 1 oder 2 aufgeführt, **ist dadurch gekennzeichnet, dass** die Steuereinheit die verbleibende Nutzungsdauer eines PCM-Pakets (5) durch Auswertung der Temperaturinformationen des Thermistors (6) berechnet.

4. Ein tragbares Klimagerät (1), wie in einem der vorherigen Ansprüchen aufgeführt, **ist dadurch gekennzeichnet, dass** die Steuereinheit die Nutzungsdauer eines PCM-Pakets (5) durch Auswertung der Temperaturinformationen des Thermistors (6) berechnet.

## Revendications

1. Dispositif de climatisation (1), **comprenant** un compresseur (2) permettant le cycle de refroidissement, un condenseur (3), un évaporateur (4), au moins un module PCM (5) transférant et stockant la chaleur du condenseur (3), et une chambre de stockage de chaleur (11) dans laquelle le module PCM (5) est placé, une thermistance (6) placée dans la chambre de stockage de chaleur (11) ou sur le module PCM (5), et une unité de commande déterminant en évaluant les informations de température de la thermistance (6), l'achèvement du temps d'utilisation du module PCM (5) lorsque la température de la chambre de stockage de chaleur (11) ou du module PCM (5) dépasse une valeur limite préenregistrée dans sa mémoire, le dispositif de climatisation étant **caractérisé en ce qu'**il est portable, **en ce que** l'unité de commande permet à l'utilisateur d'être alerté par des moyens d'alerte visuels et/ou sonores pour le refroidissement du module PCM ou pour son remplacement, **en ce que** le module PCM (5) est en forme de prisme rectangulaire, et **en ce qu'**il **comprend au** moins une plaque métallique (7) constituant au moins une surface du module PCM (5), sur laquelle la thermistance (6) est placée.

2. Un dispositif de climatisation portable (1) selon la revendication 1 **caractérisé par** un support (9) et un ressort (10) disposés dans la chambre de stockage de chaleur (11) ou sur un module PCM (5), permettant à la thermistance (6) d'être placée de manière à être en contact continu avec la surface extérieure du module PCM (5) ou la surface intérieure de la chambre de stockage de chaleur (11).

3. Un dispositif de climatisation portable (1) selon la revendication 1 ou 2 **caractérisé en ce que** l'unité de commande calcule le temps d'utilisation restant d'un module PCM (5) en évaluant les informations de température fournies par la thermistance (6).

4. Un dispositif de climatisation portable (1) selon l'une quelconque des revendications précédentes, **caractérisé en ce que** l'unité de commande calcule la durée de vie utile d'un module PCM (5) en évaluant les informations de température fournies par la thermistance (6).
